# EUROPÄISCHE PATENTSCHRIFT

(11) **EP 3 019 397 B1**
(45) Veröffentlichungstag und Bekanntmachung des Hinweises auf die Patenterteilung: **26.07.2017**
(21) Anmeldenummer: 14728180.2
(22) Anmeldetag: 04.06.2014
(51) Int. Cl.: B63H 21/32, F01N 13/12

(54) **BOOTSANTRIEB**
BOAT DRIVE
PROPULSION DE BATEAU

(30) Priorität: 09.07.2013 DE 102013213434
(43) Veröffentlichungstag der Anmeldung: 18.05.2016
(73) Patentinhaber: ZF Friedrichshafen AG, 88046 Friedrichshafen (DE)
(72) Erfinder: MANIERO, Loris, I-35031 Abano Terme (PD) (IT); FRIGO, Alberto, I-36010 Monticello Conte Otto (VI) (IT); TRANQUILLINI, Massimo, I-38065 Mori (TN) (IT)
(86) Internationale Anmeldenummer: PCT/EP2014/061522
(87) Internationale Veröffentlichungsnummer: WO 2015/003855

(56) Entgegenhaltungen:
- DE-A1- 3 542 557
- US-A- 4 600 395
- US-A- 4 764 136
- US-A- 5 421 756

## Beschreibung

Die Erfindung betrifft einen Bootsantrieb gemäß dem Oberbegriff des Anspruches 1.

Ein derartiger Bootsantrieb wird auch Sterndrive oder Heckantrieb genannt. Bei einem Sterndrive ist ein Verbrennungsmotor im Inneren eines Schiffskörpers angeordnet und der Antriebsstrang ist durch einen Heckspiegel des Schiffskörpers hindurchgeführt, sodass sich der Rest des Antriebsstranges in Form einer Antriebseinheit außerhalb des Schiffskörpers befindet. Die Antriebseinheit kann zum Zwecke der Fahrtrichtungssteuerung um eine annähernd vertikal stehende Steuerachse verschwenkt werden. Damit wird auch die Propellerwelle der Antriebseinheit verschwenkt und der von den rotierenden Propellern erzeugte Schubvektor verändert seine Richtung, wodurch sich die Fahrtrichtung des Bootes verändert.

Es sind Abgasanlagen für Sterndrive-Bootsantriebe bekannt, die mit Kühlwasser gekühlt werden. Dabei wird das Kühlwasser in die Abgasanlage eingeleitet und zumindest teilweise zusammen mit den Abgasen unter der Wasseroberfläche abgeführt. Beispielsweise werden die Abgase und das Kühlwasser in einem Abgaskanal durch den Bootsantrieb bis zu einer abtriebsseitig angeordneten Propellerwelle geleitet und durch einen Abgasauslass im Bereich der Propellerwelle unter der Wasseroberfläche abgeführt. Dadurch wird eine störende Geräuschentwicklung reduziert und störende Einflüsse durch Abgase für Personen auf dem Boot sollen verhindert werden.

Eine solche Abgasanlage ist z.B. aus der US 4 764 136 bekannt.

Die Ableitung der Abgase und des Kühlwassers durch den verhältnismäßig langen Abgaskanal und der Abgasauslass unter der Wasseroberfläche verursachen einen hohen Strömungswiderstand auf den Abgasstrom und haben daher den Nachteil, dass ein unerwünschter Abgasgegendruck auf den Verbrennungsmotor wirkt. Dadurch wird die vom Verbrennungsmotor bereitstellbare Antriebsleistung reduziert. Um diesen Nachteil zu beheben beschreibt die DE 3542557 A1 einen Bootsantrieb mit einer Abgasanlage, bei der Abgasgegendruck entlastet wird, indem die Abgase nicht durch den gesamten Abgaskanal und den unter der Wasseroberfläche angeordneten Auslass, sondern durch einen Abgasentlastungskanal oberhalb der Wasseroberfläche in die Außenluft abgeleitet werden.

Es ist die Aufgabe der vorliegenden Erfindung einen eingangs beschriebenen Bootsantrieb mit seiner Abgasanlage weiter zu verbessern.

Diese Aufgabe wird durch eine Abgasanlage für einen Bootsantrieb gemäß Anspruch 1 gelöst. Vorteilhafte Weiterbildungen sind in den abhängigen Ansprüchen beansprucht.

Die vorliegende Erfindung betrifft demnach einen Bootsantrieb, der einen im Inneren eines Schiffskörpers angeordneten Verbrennungsmotor, eine außerhalb des Schiffskörpers angeordneten Antriebseinheit mit einer Propellerwelle, und eine Abgasanlage mit einem Abgaskanal und einem Abgasauslass umfasst. Der Abgaskanal verbindet den Verbrennungsmotor mit dem Abgasauslass, um Abgase des Verbrennungsmotors und in den Abgaskanal eingeleitetes Kühlwasser abzuführen. Der Abgasauslass ist dabei an der Propellerwelle und damit unter der Wasseroberfläche angeordnet, wenn das Boot im Wasser liegt.

Zur Reduzierung des eingangs beschriebenen Abgasgegendruckes ist eine erste Abgasentlastungsöffnung im Abgaskanal zwischen dem Verbrennungsmotor und dem Abgasauslass angeordnet. Im Betrieb wird ein erster Anteil der Abgase und des Kühlwassers durch die erste Abgasentlastungsöffnung und ein zweiter Anteil der Abgase und des Kühlwassers durch den Abgasauslass abgeführt. Erfindungsgemäß sind Mittel zum Einstellen des durch die erste Abgasentlastungsöffnung abführbaren ersten Anteils vorgesehen.

Die Mittel zum Einstellen des durch die erste Abgasentlastungsöffnung abführbaren ersten Anteils ermöglichen ein einfaches, schnelles Anpassen der Abgasanlage an konkrete Betriebsbedingungen des Bootes, die sich über die Lebensdauer des Bootes auch verändern können. Zum Zeitpunkt der Entwicklung und der Konstruktion eines Bootsantriebes und des dazugehörigen Bootes sind in der Regel nicht alle Bedingungen des späteren Betriebes des Bootes bekannt. Häufig wird aus Kostengründen eine Komponente z.B. Teile eines Antriebssystems oder einer Abgasanlage für verschiedene Bootsgrößen und Bootsversionen eingesetzt. Die gleiche Abgasanlage wird beispielsweise für verschiedene Größen des Verbrennungsmotors verwendet. Dabei haben fest vorgegebenen Dimensionen und Formen im Bereich einer Abgasentlastungsöffnung den Nachteil, dass sie nicht für alle Boote und bei allen Betriebsbedingungen, bei denen sie eingesetzt werden, ideal sind. Daher ist die erfindungsgemäße Möglichkeit, den durch die erste Abgasentlastungsöffnung abführbaren ersten Anteil an Abgasen und Kühlwasser schnell anzupassen, ein wesentlicher Vorteil der vorliegenden Erfindung. Damit kann die Aufteilung der Abgas- und Kühlwasseranteile einfach an aktuelle Bedingungen angepasst werden im Hinblick auf eine optimale Leistungsausnutzung des Verbrennungsmotors, niedrige Betriebsgeräusche und eine geringe Abgasbelästigung im Bereich des Bootes.

Bevorzugt umfassen die Mittel zum Einstellen ein zumindest teilweise in dem Abgaskanal angeordnetes Einstellblech, das in verschiedenen Positionen eingestellt werden kann. Ein solches Einstellblech ist vorzugsweise in dem Abgaskanal verschiebbar angeordnet und teilt die Abgase und das Kühlwasser in dem Abgaskanal auf in den ersten und den zweiten Anteil an Abgasen und Kühlwasser. Demnach leitet das teilweise in den, aus Abgasen und Kühlwasser bestehenden, Abgasstrom hineinragende Einstellblech einen kleineren oder größeren Anteil des Abgasstromes um, sodass dieser erste Anteil durch die erste Abgasentlastungsöffnung abgeführt wird.

Als einfache Ausführung des im Abgaskanal verschiebbar angeordneten Einstellbleches eignet sich ein einfaches Blech mit Langlöchern, durch die das Blech in der gewünschten Position mittels Befestigungsschrauben an der Abgasanlage fixiert werden kann. Zum Nachpositionieren des Einstellbleches müssen dann die Befestigungsschrauben lediglich gelöst werden, das Blech verschoben und die Befestigungsschrauben wieder angezogen werden. Denkbar ist auch ein hilfskraftbetätigtes Nachstellen des Einstellbleches mit Hilfe beispielsweise eines elektrischen, pneumatischen oder hydraulischen Aktuators. Auf diese Weise kann das Einstellblech auch während des Fahrbetriebes des Bootes eingestellt werden. Alternativ dazu können auch Einstellbleche mit verschiedenen Formen oder Dimensionen zur Befestigung an der ersten Abgasentlastungsöffnung bereitgehalten werden, um durch den Austausch der Einstellbleche den durch die zweiten Abgasentlastungsöffnungen abführbaren ersten Anteil an Abgas und Kühlwasser einzustellen bzw. nachzustellen.

Bevorzugt ist das Einstellblech in dem Abgaskanal derart angeordnet, dass der erste Anteil, unter Ausnutzung der auf das Kühlwasser wirkenden Schwerkraft und Zentrifugalkraft, einen größeren Teil des Kühlwassers enthält als der zweite Anteil. Auf diese Weise kann ein großer Teil des in den Abgaskanal eingeführten Kühlwassers durch die erste Abgasentlastungsöffnung aus dem Abgaskanal abgeführt werden und muss nicht durch den gesamten, langen Abgaskanal bis zum Abgasauslass an der Propellerwelle hindurchgeführt werden. Bei bestimmten Verbrennungsmotoren müssen mehrere hundert Liter Kühlwasser pro Minute durch die Abgasanlage geführt werden, wobei ein hoher Abgasgegendruck verursacht würde, wenn die gesamte Menge dieses Kühlwassers durch den gesamten, langen Abgaskanal bis zum Abgasauslass an der Propellerwelle hindurchgeführt werden müsste. Die große Menge an Abgasen ohne Kühlwasser lässt sich aufgrund ihres geringeren Strömungswiderstandes leichter durch den langen Abgaskanal bis zum Abgasauslass führen. Aufgrund der Abgas- und Lärmbelästigung für die Personen auf dem Boot ist es zudem vorteilhaft, wenn ein möglichst kleiner Teil der Abgase durch die erste Abgasentlastungsöffnung aus dem Abgaskanal austritt und ein möglichst großer Teil der Abgase durch die weiter von den Personen entfernt, unter der Wasseroberfläche angeordnete Auslassöffnung an der Propellerwelle austritt.

Die Mittel zum Einstellen sind bevorzugt an einem am Heckspiegel befestigten Kanalabschnitt des Abgaskanals angeordnet und die zumindest eine erste Abgasentlastungsöffnung ist im Bereich des Heckspiegels angeordnet. Der Abgaskanal wird vom Verbrennungsmotor kommend durch den Heckspiegel hindurchgeführt zur außerhalb des Bootskörpers angeordneten Antriebseinheit. Bei gängigen Ausführungen der Abgasanlage besteht der motornahe Teil der Abgasanlage häufig aus mehreren Abgasrohren, die in dem Kanalabschnitt zusammengeführt werden der am Heckspiegel befestigt ist und der durch den Heckspiegel hindurchgeführt ist. Die erste Möglichkeit im Verlauf des Abgaskanals einen ersten Anteil der Abgase und des Kühlwassers nach außen abzuführen ergibt sich an einem solchen am Heckspiegel des Bootes befestigten Kanalabschnitt.

Bevorzugt ist die erste Abgasentlastungsöffnung derart an dem Bootsantrieb positioniert, dass sie zumindest im gleitenden Fahrbetrieb des Bootes oberhalb der Wasseroberfläche angeordnet ist. Der Bootskörper und der Bootsantrieb liegen beim Stillstand und bei geringen Fahrgeschwindigkeiten, wie beispielsweise während dem Manövrieren des Bootes, tiefer im Wasser als bei hohen Fahrgeschwindigkeiten, bei denen das Boot auf dem Wasser gleitet. Der unterschiedliche Wasserspiegel am Bootsantrieb bei geringen und hohen Fahrgeschwindigkeiten wird im Rahmen der vorliegenden Erfindung dadurch ausgenutzt, dass die Abgasentlastungsöffnungen bei geringen Fahrgeschwindigkeiten unter der Wasseroberfläche angeordnet sind, wodurch der Geräuschpegel und die Abgasbelästigung oberhalb der Wasseroberfläche sehr niedrig sind. Bei niedrigen Fahrgeschwindigkeiten werden vom Verbrennungsmotor auch nur niedrige Antriebsleistungen benötigt, sodass die Menge an Abgasen und Kühlwasser ebenfalls niedrig sind. Deshalb ist bei niedrigen Fahrgeschwindigkeiten die eingangs beschriebene Problematik des Abgasgegendruckes nicht oder nur in geringem Maß vorhanden.

Beim Erhöhen der Fahrgeschwindigkeit hebt sich das Boot ein Stück aus dem Wasser und ab einer bestimmten Fahrgeschwindigkeit gleitet das Boot auf der Wasseroberfläche, wobei die Abgasentlastungsöffnungen oberhalb der Wasseroberfläche angeordnet sind. Dadurch können die Abgase und das Kühlwasser ohne weiteren Widerstand aus den Abgasentlastungsöffnungen austreten, wodurch der Abgasgegendruck erheblich reduziert wird. Diese Auswirkungen sind deshalb so beachtlich, weil der Verbrennungsmotor gerade bei hohen Fahrgeschwindigkeiten hohe Antriebsleistungen abgeben muss. Dabei müssen hohe Mengen an Abgasen und Kühlwasser durch die Abgasanlage abgeführt werden und die Problematik des Abgasgegendruckes ist akut. Dagegen werden die höhere Lärmentwicklung und der Abgasaustritt an den Abgasentlastungsöffnungen bei hohen Fahrgeschwindigkeiten auf dem Boot weniger wahrgenommen.

Eine weitere bevorzugte Ausführung der Erfindung sieht zusätzlich zu der genannten ersten Abgasentlastungsöffnung zumindest eine zweite Abgasentlastungsöffnung vor, die zwischen der ersten Abgasentlastungsöffnung und dem Abgasauslass an der Antriebseinheit angeordnet ist, so dass ein dritter Anteil der Abgase und des Kühlwassers durch die zweite Abgasentlastungsöffnung austritt. Dabei kann beispielsweise auf jeder Seite der Antriebseinheit, d.h. backbord und steuerbord, jeweils eine zweite Abgasentlastungsöffnung vorgesehen sein. Vorzugsweise sind auch an der bzw. den zweiten Abgasentlastungsöffnungen Mittel zum Einstellen des durch die zweiten Abgasentlastungsöffnungen abführbaren dritten Anteils an Abgas und Kühlwasser vorgesehen.

Diese Mittel zum Einstellen des dritten Anteils umfassen bevorzugt zumindest ein Abdeckblech, mit dem die zweite Abgasentlastungsöffnung auf verschiedene Öffnungsgrößen einstellbar ist. Das Abdeckblech kann beispielsweise mit Langlöchern versehen sein, durch die das Abdeckblech in einer bestimmten gewünschten Position mittels Befestigungsschrauben an der Abgasanlage oder an der Antriebseinheit fixiert wird, so dass das Abdeckblech einen bestimmten Teil der maximalen Fläche der zweiten Abgasentlastungsöffnung freigibt und den anderen Teil abdeckt bzw. verschließt. Alternativ dazu können auch Abdeckbleche mit verschieden großen Durchtrittsöffnungen an der zweiten Abgasentlastungsöffnung befestigt werden, um so den durch die zweiten Abgasentlastungsöffnungen abführbaren dritten Anteils an Abgas und Kühlwasser einzustellen.

Bevorzugt ist auch die zweite Abgasentlastungsöffnung derart an dem Bootsantrieb positioniert, dass sie zumindest im gleitenden Fahrbetrieb des Bootes oberhalb der Wasseroberfläche angeordnet ist. Die sich daraus ergebenden Vorteile sind die gleichen, die bereits oben zu der ersten Abgasentlastungsöffnung ausführlich beschrieben worden sind.

Die verschiedenen Anteile an Abgas und Kühlwasser, die durch die Abgasentlastungsöffnungen abgeführt werden, und deren Auswirkungen auf die Lärmentwicklung und die vom Verbrennungsmotor abgegebene Antriebsleistung können in der Praxis einfach bei Testfahrten getestet und ermittelt werden, um eine optimale Einstellung der genannten Anteile zu erreichen. Die durch die erste und zweite Abgasentlastungsöffnungen abführbaren Anteile an Abgas und Kühlwasser ist beispielsweise in Form eines prozentualen Anteils am gesamten durch den Abgaskanal abgeführten Volumenstrom oder der Masse an Abgas und Kühlwasser bestimmbar bzw. messbar.

Die Erfindung und weitere Vorteile werden nachfolgend anhand der dazugehörigen Figuren näher erläutert.
- Fig. 1: zeigt die schematische Darstellung eines erfindungsgemäßen Bootsantriebs in einer ersten Ausführung;
- Fig. 2: zeigt die schematische Darstellung eines erfindungsgemäßen Bootsantriebs in einer zweiten Ausführung;
- Fig. 3: zeigt die schematische Darstellung der Antriebseinheit des erfindungsgemäßen Bootsantriebs in einer zweiten Ausführung und
- Fig. 4: zeigt den Ausschnitt X aus der Fig. 3.

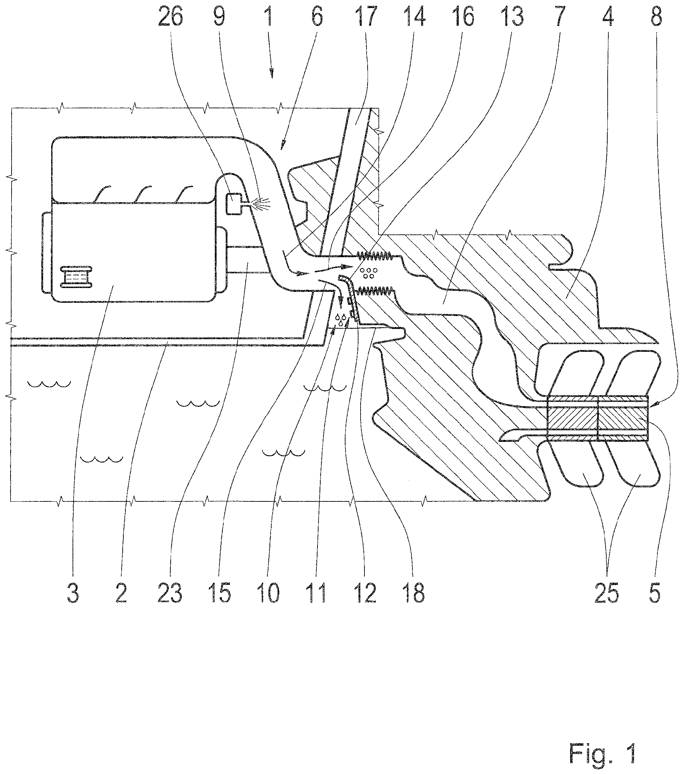

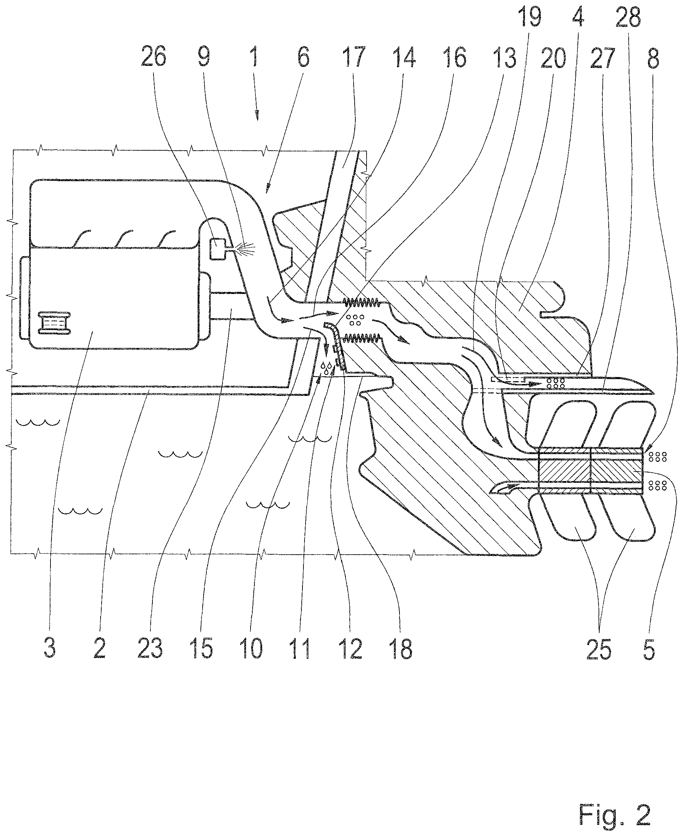

Der in Fig. 1 gezeigte Bootsantrieb 1 umfasst einen im Inneren eines Schiffskörpers 2 angeordneten Verbrennungsmotor 3, eine außerhalb des Schiffskörpers 2 angeordnete Antriebseinheit 4 mit einer Propellerwelle 5. Auf der Propellerwelle 5 sind zwei Propeller 25 angeordnet. Des Weiteren umfasst der Bootsantrieb 1 eine Abgasanlage 6 mit einem Abgaskanal 7 und einem Abgasauslass 8. Der Abgasauslass 8 ist an der Propellerwelle 5 angeordnet. Eine Motorabtriebswelle 23 treibt über nicht dargestellte Wellen und Getriebe die Propellerwelle 5 an. Derartige mechanische Antriebsstränge für Sterndrive-Bootsantriebe sind bekannt. Deshalb ist der mechanische Antriebsstrang hier nicht weiter beschrieben und gezeichnet. Die Antriebseinheit 4 ist in der Fig. 1 und der Fig. 2 in einer Schnittdarstellung gezeigt, um die Einzelheiten der Abgasanlage 6 und des Abgaskanals 7 sichtbar zu machen. Der Abgaskanal 7 verbindet den Verbrennungsmotor 3 mit dem Abgasauslass 8, um Abgase des Verbrennungsmotors 3 und in den Abgaskanal 7 eingeleitetes Kühlwasser 9 abzuführen. Das Kühlwasser 9 wird dem Abgaskanal 7 mittels einer Kühlwasserzufuhr 26 zugeführt, kurz nachdem die Abgase den Verbrennungsmotor 3 verlassen.

Eine erste Abgasentlastungsöffnung 10 ist im Abgaskanal 7 zwischen dem Verbrennungsmotor 3 und dem Abgasauslass 8 angeordnet. Im Betrieb wird ein erster Anteil 15 des Abgasstromes 14 durch diese erste Abgasentlastungsöffnung 10 abgeführt. Ein zweiter Anteil 16 der Abgase und des Kühlwassers 9 wird durch den Abgasauslass 8 abgeführt. Der Abgasstrom 14 umfasst Abgase des Verbrennungsmotors 3 und das in den Abgaskanal 7 eingeführte Kühlwasser 9. Der Abgasstrom 14 und der erste, zweite und dritte Anteil 15, 16 und 19 sind in den Figuren symbolisch als Pfeile dargestellt.

An der ersten Abgasentlastungsöffnung 10 sind Mittel 11 zum Einstellen des durch die erste Abgasentlastungsöffnung 10 abführbaren ersten Anteils 15 vorgesehen. In der gezeigten Ausführungsform sind die Mittel 11 zum Einstellen als ein teilweise in dem Abgaskanal 7 angeordnetes Einstellblech 12 ausgebildet. Das Einstellblech 12 kann in verschiedenen Positionen eingestellt werden. D.h. abhängig von der jeweiligen Einstellung ragt das Einstellblech 12 mit seinem freien Ende 13 tiefer oder weniger tief in den Abgaskanal 7 hinein. Das Einstellblech 12 ist an seinem freien Ende 13 in Richtung entgegen dem Abgasstrom 14 gekrümmt und teilt den Abgasstrom 14 mit dem Kühlwasser 9 in den ersten Anteil 15 und in den zweiten Anteil 16 auf.

Das Einstellblech 12 ist in dem Abgaskanal 7 verschiebbar angeordnet und teilt den Abgasstrom 14 auf in den ersten Anteil 15 und den zweiten Anteil 16. Dabei ist das Einstellblech 12 in dem Abgaskanal 7 derart angeordnet, dass der erste Anteil 15, unter Ausnutzung der auf das Kühlwasser 9 wirkenden Schwerkraft und Zentrifugalkraft, einen größeren Teil des Kühlwassers 9 enthält als der zweite Anteil 16. Das freie Ende 13 des Einstellbleches 12 bildet eine horizontal verlaufende Kante, die den Abgasstrom 14 aufteilt. Unterhalb der Kante strömt der erste Anteil 15 mit dem wesentlich größeren Teil des Kühlwassers 9 durch die erste Abgasentlastungsöffnung 10 ins Freie. Oberhalb der Kante strömt der zweite Anteil 16 des Abgasstroms 14, der überwiegend aus Abgasen und einem geringen Teil des Kühlwassers 9 besteht, weiter durch den Abgaskanal 7 in Richtung des Abgasauslasses 8. Im Bereich des Einstellbleches 12 wirken die Schwerkraft und die Zentrifugalkraft in etwa der gleichen Richtung auf das Kühlwasser, weil der Abgaskanal 7 kurz vor dem Einstellblech 12 eine Krümmung aufweist, um von oben her kommend in eine etwa horizontale Richtung überzugehen.

Die erste Abgasentlastungsöffnung 10 ist im Bereich des Heckspiegels 17 des Bootskörpers 2 angeordnet. Dazu ist das Einstellblech 12 an einem am Heckspiegel 17 befestigten Kanalabschnitt des Abgaskanals 7 befestigt. Die Befestigung des Kanalabschnittes am Heckspiegel 17 ist in der Fig. 1 nicht dargestellt.

Die erste Abgasentlastungsöffnung 10 ist so am Bootsantrieb 1 positioniert, dass sie im gleitenden Fahrbetrieb des Bootes oberhalb der Wasseroberfläche 18 angeordnet ist. Die Fig. 1 zeigt die Position des Bootskörpers 2 und des Bootsantriebes 1 in Bezug zur Wasseroberfläche 18 beim gleitenden Fahrbetrieb des Bootes. Bei langsamer Fahrt und beim Stillstand des Bootes liegt der Bootskörper 2 und der Bootsantrieb 1 dagegen so tief im Wasser, dass die erste und die zweite Abgasentlastungsöffnung 10 und 20 unter der Wasseroberfläche 18 angeordnet sind.

Die Fig. 2 zeigt eine zweite Ausführung der Erfindung, bei der die Auspuffanlage zusätzlich zu der ersten Abgasentlastungsöffnung 10 eine zweite Abgasentlastungsöffnung 20 aufweist. Ansonsten sind die erste und die zweite Ausführung der Erfindung gleich, weshalb die bereits zur Fig. 1 beschriebenen Elemente hier nicht mehr beschrieben werden. Gleiche Elemente sind in den Figuren mit gleichen Bezugszeichen versehen.

Vorteilhaft ist an der Antriebseinheit 4 auf jeder Seite je eine zweite Abgasentlastungsöffnungen 20 angeordnet, von denen in Fig. 2 nur eine sichtbar ist. Die zweiten Abgasentlastungsöffnungen 20 sind zwischen der ersten Abgasentlastungsöffnung 10 und dem Abgasauslass 8 an der Antriebseinheit 4 angeordnet, so dass im Betrieb ein dritter Anteil 19 des Abgasstromes 14, bestehend aus Abgasen und Kühlwasser 9, durch die zweite Abgasentlastungsöffnung 20 austritt.

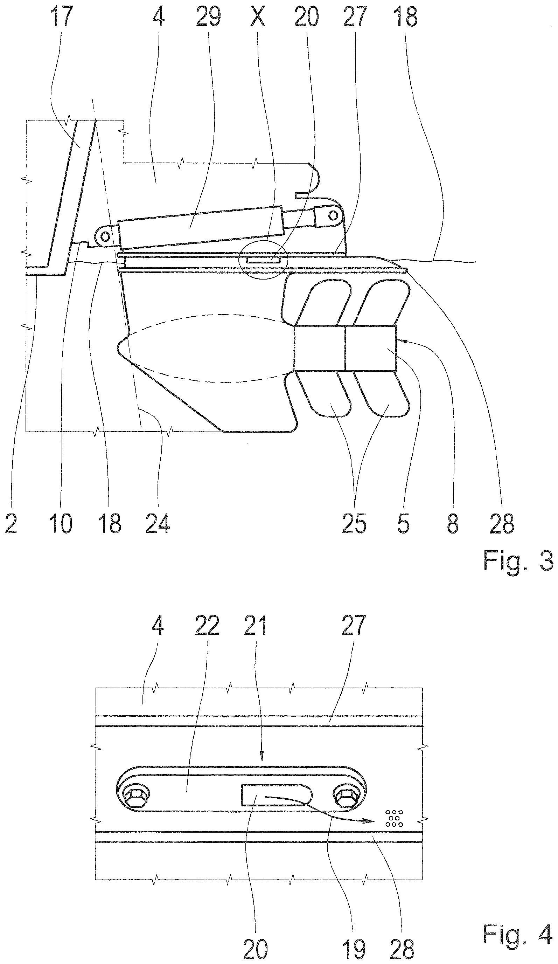

An den zweiten Abgasentlastungsöffnungen 20 sind Mittel 21 zum Einstellen des durch die zweite Abgasentlastungsöffnung 20 abführbaren dritten Anteils 19 an Abgas und Kühlwasser 9 vorgesehen. Diese Mittel 20 zum Einstellen des dritten Anteils 19 sind in Form eines Abdeckbleches 22 ausgebildet. Mit Hilfe des Abdeckbleches 22 ist die zweite Abgasentlastungsöffnung 20 auf eine bestimmte Öffnungsgröße eingestellt. Andere Abdeckbleche mit anderen Durchtrittsöffnungen als das in Fig. 4 gezeigte Abdeckblech 22 können einfach gegen das gezeigte Abdeckblech 22 ausgetauscht werden, um so den dritten Anteil 19 zu verändern.

Auch die zweite Abgasentlastungsöffnung 20 ist derart an dem Bootsantrieb 1 positioniert, dass sie zumindest im gleitenden Fahrbetrieb des Bootes oberhalb der Wasseroberfläche 18 angeordnet ist. Auch die Fig. 2 zeigt die Position des Bootskörpers 2 und des Bootsantriebes 1 in Bezug zur Wasseroberfläche 18 beim gleitenden Fahrbetrieb des Bootes.

Die Fig. 3 zeigt die zweite Ausführung der Erfindung, wobei die Antriebseinheit 4 des erfindungsgemäßen Bootsantriebes 1 im Gegensatz zu den Fig. 1 und 2 nicht im Schnitt dargestellt ist. Die Antriebseinheit 4 kann zum Zwecke der Fahrtrichtungssteuerung um eine annähernd vertikal stehende Steuerachse 24 verschwenkt werden. Die Verschwenkbewegung wird mit jeweils einer auf jeder Seite der Antriebseinheit 4 angeordneten druckmittelbetätigten Kolben-Zylinder-Einheit 29 betätigt. Damit wird auch die Propellerwelle 5 der Antriebseinheit 4 verschwenkt und der von den rotierenden Propellern 25 erzeugte Schubvektor verändert seine Richtung, sodass das Boot seine Fahrtrichtung ändert. In dieser Ausführung ist die Steuerachse 24 gegenüber der Vertikalen um einige Winkelgrade geneigt.

Die zweite Abgasentlastungsöffnung 20 ist in dem mit X gekennzeichneten Bereich der Antriebseinheit 4 zwischen einem oberen Leitblech 27 und einem unteren Leitblech 28 angeordnet. Wenn das Boot bei hoher Fahrgeschwindigkeit auf dem Wasser gleitet, wie in allen Figuren dargestellt, dann ist auch die zweite Abgasentlastungsöffnung 20 knapp oberhalb der Wasseroberfläche 18 angeordnet.

Die Fig. 4 zeigt den Bereich X in vergrößerter Darstellung. Dabei ist erkennbar, dass als Mittel 21 zum Einstellen des dritten Anteils 19 ein Abdeckblech 22 dient. Das Abdeckblech 22 ist zwischen dem oberen Leitblech 27 und dem unteren Leitblech 28 an der zweiten Abgasentlastungsöffnung 20 an die Antriebseinheit 4 angeschraubt. Das Abdeckblech 22 weist die zweite Abgasentlastungsöffnung 20 mit einer bestimmten Fläche auf, durch die die Größe des dritten Anteils 19 am Abgasstrom 14 bestimmt wird. Eine Veränderung der Größe des dritten Anteils 19 kann erreicht werden, indem das dargestellte Abdeckblech 22 durch ein anderes Abdeckblech mit einer anderen Abgasentlastungsöffnung 20 ersetzt wird. Eine größere Abgasentlastungsöffnung 20 vergrößert den dritten Anteil 19. Eine kleinere Abgasentlastungsöffnung 20 verringert den dritten Anteil 19.

### Bezugszeichen

- 1: Bootsantrieb
- 2: Bootskörper
- 3: Verbrennungsmotor
- 4: Antriebseinheit
- 5: Propellerwelle
- 6: Abgasanlage
- 7: Abgaskanal
- 8: Abgasauslass
- 9: Kühlwasser
- 10: erste Abgasentlastungsöffnung
- 11: Mittel zum Einstellen
- 12: Einstellblech
- 13: freies Ende
- 14: Abgasstrom
- 15: erster Anteil
- 16: zweiter Anteil
- 17: Heckspiegel
- 18: Wasseroberfläche
- 19: dritter Anteil
- 20: zweite Abgasentlastungsöffnung
- 21: Mittel zum Einstellen
- 22: Abdeckblech
- 23: Motorabtriebswelle
- 24: Steuerachse
- 25: Propeller
- 26: Kühlwasserzufuhr
- 27: oberes Leitblech
- 28: unteres Leitblech
- 29: Kolben-Zylinder-Einheit

## Patentansprüche

1. Bootsantrieb (1) umfassend
einen im Inneren eines Schiffskörpers (2) angeordneten Verbrennungsmotor (3), eine außerhalb des Schiffskörpers (2) angeordneten Antriebseinheit (4) mit einer Propellerwelle (5), und
eine Abgasanlage (6) mit einem Abgaskanal (7) und einem Abgasauslass (8), wobei der Abgaskanal (7) den Verbrennungsmotor (3) mit dem Abgasauslass (8) verbindet, um Abgase des Verbrennungsmotors (3) und in den Abgaskanal (7) eingeleitetes Kühlwasser (9) abzuführen, wobei der Abgasauslass (8) an der Propellerwelle (5) angeordnet ist, wobei eine erste Abgasentlastungsöffnung (10) im Abgaskanal (7) zwischen dem Verbrennungsmotor (3) und dem Abgasauslass (8) angeordnet ist, wobei im Betrieb ein erster Anteil (15) der Abgase und des Kühlwassers (9) durch die erste Abgasentlastungsöffnung (10) und ein zweiter Anteil (16) der Abgase und des Kühlwassers (9) durch den Abgasauslass (8) abgeführt werden, wobei Mittel (11) zum Einstellen des durch die erste Abgasentlastungsöffnung (10) abführbaren ersten Anteils (15) vorgesehen sind, **dadurch gekennzeichnet, dass** die Mittel (11) ein zumindest teilweise in dem Abgaskanal (7) angeordnetes Einstellblech (12) umfassen, das in verschiedenen Positionen eingestellt werden kann.

2. Bootsantrieb (1) nach Anspruch 1, **dadurch gekennzeichnet, dass** das Einstellblech (12) in dem Abgaskanal (7) verschiebbar angeordnet ist und die Abgase und das Kühlwasser (9) in dem Abgaskanal (7) aufteilt in den ersten Anteil (15) und den zweiten Anteil (16).

3. Bootsantrieb (1) nach Anspruch 1 oder 2, **dadurch gekennzeichnet, dass** das Einstellblech (12) in dem Abgaskanal (7) derart angeordnet ist, dass der erste Anteil (15), unter Ausnutzung der auf das Kühlwasser (9) wirkenden Schwerkraft und Zentrifugalkraft, einen größeren Teil des Kühlwassers (9) enthält als der zweite Anteil (16).

4. Bootsantrieb (1) nach einem der vorgenannten Ansprüche, **dadurch gekennzeichnet, dass** die Mittel zum Einstellen an einem am Heckspiegel (17) befestigbaren Kanalabschnitt des Abgaskanals (7) angeordnet sind, und dass die zumindest eine erste Abgasentlastungsöffnung (10) im Bereich des Heckspiegels (17) angeordnet ist.

5. Bootsantrieb (1) nach einem der vorgenannten Ansprüche, **dadurch gekennzeichnet, dass** die erste Abgasentlastungsöffnung (10) derart an dem Bootsantrieb (4) positioniert ist, dass sie zumindest im gleitenden Fahrbetrieb des Bootes oberhalb der Wasseroberfläche (18) angeordnet ist.

6. Bootsantrieb (1) nach einem der vorgenannten Ansprüche, **dadurch gekennzeichnet, dass** die Abgasanlage (6) zumindest eine zweite Abgasentlastungsöffnung (20) umfasst, die zwischen der ersten Abgasentlastungsöffnung (10) und dem Abgasauslass (8) an der Antriebseinheit (4) angeordnet ist, so dass ein dritter Anteil (19) der Abgase und des Kühlwassers (9) durch die zweite Abgasentlastungsöffnung (20) austritt.

7. Bootsantrieb (1) nach Anspruch 6, **dadurch gekennzeichnet, dass** Mittel (21) zum Einstellen des durch die zweite Abgasentlastungsöffnung (20) abführbaren dritten Anteils (19) an Abgas und Kühlwasser (9) an der zumindest einen zweiten Abgasentlastungsöffnung (20) vorgesehen sind.

8. Bootsantrieb (1) nach Anspruch 6 oder 7, **dadurch gekennzeichnet, dass** die Mittel (21) zum Einstellen des dritten Anteils (19) zumindest ein Abdeckblech (22) umfassen, mit dem die zweite Abgasentlastungsöffnung (20) auf verschiedene Öffnungsgrößen einstellbar ist.

9. Bootsantrieb (1) nach einem der Ansprüche 6 bis 8, **dadurch gekennzeichnet, dass** die zweite Abgasentlastungsöffnung (20) derart an dem Bootsantrieb (4) positioniert ist, dass sie zumindest im gleitenden Fahrbetrieb des Bootes oberhalb der Wasseroberfläche (18) angeordnet ist.

## Claims

1. Boat propulsion system (1) comprising an internal combustion engine (3) which is arranged in the interior of a hull (2), a propulsion unit (4) which is arranged outside the hull (2) with a propeller shaft (5), and an exhaust gas system (6) with an exhaust gas duct (7) and an exhaust gas outlet (8), the exhaust gas duct (7) connecting the internal combustion engine (3) to the exhaust gas outlet (8), in order to discharge exhaust gases of the internal combustion engine (3) and cooling water (9) which has been introduced into the exhaust gas duct (7), the exhaust gas outlet (8) being arranged on the propeller shaft (5), a first exhaust gas relief opening (10) being arranged in the exhaust gas duct (7) between the internal combustion engine (3) and the exhaust gas outlet (8), a first proportion (15) of the exhaust gases and the cooling water (9) being discharged during operation through the first exhaust gas relief opening (10), and a second proportion (16) of the exhaust gases and the cooling water (9) being discharged through the exhaust gas outlet (8), means (11) for setting the first proportion (15) which can be discharged through the first exhaust gas relief opening (10) being provided, **characterized in that** the means (11) comprise a setting plate (12) which is arranged at least partially in the exhaust gas duct (7) and can be set in different positions.

2. Boat propulsion system (1) according to Claim 1, **characterized in that** the setting plate (12) is arranged displaceably in the exhaust gas duct (7) and divides the exhaust gases and the cooling water (9) in the exhaust gas duct (7) into the first proportion (15) and the second proportion (16).

3. Boat propulsion system (1) according to Claim 1 or 2, **characterized in that** the setting plate (12) is arranged in the exhaust gas duct (7) in such a way that, utilizing the centrifugal force and the gravity which acts on the cooling water (9), the first proportion (15) comprises a greater part of the cooling water (9) than the second proportion (16).

4. Boat propulsion system (1) according to one of the preceding claims, **characterized in that** the means for setting are arranged on a duct section of the exhaust gas duct (7), which duct section can be fastened to the transom (17), and **in that** the at least one first exhaust gas relief opening (10) is arranged in the region of the transom (17).

5. Boat propulsion system (1) according to one of the preceding claims, **characterized in that** the first exhaust gas relief opening (10) is positioned on the boat propulsion system (4) in such a way that it is arranged above the water surface (18) at least during gliding operation of the boat.

6. Boat propulsion system (1) according to one of the preceding claims, **characterized in that** the exhaust gas system (6) comprises at least one second exhaust gas relief opening (20) which is arranged on the propulsion unit (4) between the first exhaust gas relief opening (10) and the exhaust gas outlet (8), with the result that a third proportion (19) of the exhaust gases and the cooling water (9) exits through the second exhaust gas relief opening (20).

7. Boat propulsion system (1) according to Claim 6, **characterized in that** means (21) for setting the third proportion (19) of exhaust gas and cooling water (9) which can be discharged through the second exhaust gas relief opening (20) are provided at the at least one second exhaust gas relief opening (20).

8. Boat propulsion system (1) according to Claim 6 or 7, **characterized in that** the means (21) for setting the third proportion (19) comprise at least one covering plate (22), by means of which the second exhaust gas relief opening (20) can be set to different opening sizes.

9. Boat propulsion system (1) according to one of Claims 6 to 8, **characterized in that** the second exhaust gas relief opening (20) is positioned on the boat propulsion system (4) in such a way that it is arranged above the water surface (18) at least during gliding operation of the boat.

## Revendications

1. Propulsion de bateau (1), comprenant un moteur à combustion (3) disposé à l'intérieur d'une coque (2), une unité de propulsion (4) disposée à l'extérieur de la coque (2), avec un arbre d'hélice (5), et
une installation de gaz d'échappement (6) avec un conduit de gaz d'échappement (7) et une sortie de gaz d'échappement (8), le conduit de gaz d'échappement (7) reliant le moteur à combustion (3) à la sortie de gaz d'échappement (8) afin d'évacuer les gaz d'échappement du moteur à combustion (3) et l'eau de refroidissement (9) introduite dans le conduit de gaz d'échappement (7), la sortie de gaz d'échappement (8) étant disposée au niveau de l'arbre d'hélice (5), une première ouverture de décharge des gaz d'échappement (10) étant disposée dans le conduit de gaz d'échappement (7) entre le moteur à combustion (3) et la sortie de gaz d'échappement (8), une première proportion (15) des gaz d'échappement et de l'eau de refroidissement (9) étant évacuée pendant le fonctionnement à travers la première ouverture de décharge des gaz d'échappement (10) et une deuxième proportion (16) des gaz d'échappement et de l'eau de refroidissement (9) étant évacuée à travers la sortie de gaz d'échappement (8),
des moyens (11) étant prévus pour ajuster la première proportion (15) pouvant être évacuée à travers la première ouverture de décharge des gaz d'échappement (10), **caractérisée en ce que** les moyens (11) comprennent une tôle d'ajustement (12) disposée au moins en partie dans le conduit de gaz d'échappement (7), qui peut être ajustée dans diverses positions.

2. Propulsion de bateau (1) selon la revendication 1, **caractérisée en ce que** la tôle d'ajustement (12) est disposée de manière déplaçable dans le conduit de gaz d'échappement (7) et divise les gaz d'échappement et l'eau de refroidissement (9) dans le conduit de gaz d'échappement (7) en la première proportion (15) et la deuxième proportion (16).

3. Propulsion de bateau (1) selon la revendication 1 ou 2, **caractérisée en ce que** la tôle d'ajustement (12) est disposée dans le conduit de gaz d'échappement (7) de telle sorte que la première proportion (15), en utilisant la force de gravité et la force centrifuge agissant sur l'eau de refroidissement (9), contienne une plus grande partie de l'eau de refroidissement (9) que la deuxième proportion (16).

4. Propulsion de bateau (1) selon l'une quelconque des revendications précédentes, **caractérisée en ce que** les moyens d'ajustement sont disposés au niveau d'une portion de conduit du conduit de gaz d'échappement (7) pouvant être fixée au tableau arrière (17), et **en ce que** l'au moins une première ouverture de décharge des gaz d'échappement (10) est disposée dans la région du tableau arrière (17).

5. Propulsion de bateau (1) selon l'une quelconque des revendications précédentes, **caractérisée en ce que** la première ouverture de décharge des gaz d'échappement (10) est positionnée au niveau de la propulsion de bateau (4) de telle sorte qu'elle soit disposée au-dessus de la surface de l'eau (18) au moins pendant le fonctionnement de conduite de glissement du bateau.

6. Propulsion de bateau (1) selon l'une quelconque des revendications précédentes, **caractérisée en ce que** l'installation de gaz d'échappement (6) comprend au moins une deuxième ouverture de décharge des gaz d'échappement (20) qui est disposée entre la première ouverture de décharge des gaz d'échappement (10) et la sortie de gaz d'échappement (8) au niveau de l'unité de propulsion (4), de telle sorte qu'une troisième proportion (19) des gaz d'échappement et de l'eau de refroidissement (9) sorte à travers la deuxième ouverture de décharge des gaz d'échappement (20).

7. Propulsion de bateau (1) selon la revendication 6, **caractérisée en ce que** les moyens (21) pour l'ajustement de la troisième proportion (19) de gaz d'échappement et d'eau de refroidissement (9) pouvant être évacuée à travers la deuxième ouverture de décharge des gaz d'échappement (20) sont prévus au niveau de l'au moins une deuxième ouverture de décharge des gaz d'échappement (20).

8. Propulsion de bateau (1) selon la revendication 6 ou 7, **caractérisée en ce que** les moyens (21) pour l'ajustement de la troisième proportion (19) comprennent au moins une tôle de recouvrement (22) avec laquelle la deuxième ouverture de décharge des gaz d'échappement (20) peut être ajustée à différentes grandeurs d'ouverture.

9. Propulsion de bateau (1) selon l'une quelconque des revendications 6 à 8, **caractérisée en ce que** la deuxième ouverture de décharge des gaz d'échappement (20) est positionnée au niveau de la propulsion de bateau (4) de telle sorte qu'elle soit disposée au-dessus de la surface de l'eau (18) au moins pendant le fonctionnement de conduite de glissement du bateau.
